# EUROPEAN PATENT SPECIFICATION

(11) **EP 4 511 280 B1**
(45) Date of publication and mention of the grant of the patent: **03.09.2025**
(21) Application number: 23721481.2
(22) Date of filing: 21.04.2023
(51) Int. Cl.: B62M 27/02, A63C 5/035, A63C 5/08, A63C 11/10, B62B 5/00

(54) **A DEVICE TO FACILITATE SLIDING MOVEMENT**
VORRICHTUNG ZUR ERLEICHTERUNG EINER SCHIEBEBEWEGUNG
DISPOSITIF POUR FACILITER UN MOUVEMENT DE GLISSEMENT

(30) Priority: 21.04.2022 SK PV472022 U
(43) Date of publication of application: 26.02.2025
(73) Proprietor: BRIDGE - EU, s.r.o., 055 62 Prakovce 15 (SK)
(72) Inventor: VINDT, Michal, 040 01 Kosice-Stare Mesto (SK)
(74) Representative: Majlingová, Zuzana
(86) International application number: PCT/SK2023/000003
(87) International publication number: WO 2023/204771

(56) References cited:
- WO-A1-2022/189930
- WO-A1-2022/262994
- WO-A1-2023/028761
- CH-A2- 712 977
- DE-U1- 202012 101 242
- IT-A1- 201800 006 186
- SK-U1- 472 022
- SK-Y1- 9 760
- US-A1- 2017 361 202
- US-A1- 2022 203 210

## Description

### Technical field

The technical solution refers to a device facilitating sliding movement intended for sports equipment such as skis - skialp skis, cross-country skis, sledges, etc.

### Background Art

Currently, there are several variants of technical aids that help recreational sportsmen & women overcome various terrain obstacles, slopes and distances while engaging in sport activities.

Several improvements and modifications of sporting goods are described in patent literature. As an example, we provide patents GB no. 2568652 A - A motorized sled and GB no. 2499048 A - A steering and speed control sled. Next, we would like to mention patent: SK UV 8118 - A racing sled with sled addition, which has a riser on the back structure of the sled that bridges the left and right sled. Patents SK UV 8337 and SK UV 8458 deal with the adjustment of the front and rear part of the ski binding in order to minimize weight and simplify the use of skis in walking mode.

Document CH 712 977 A2 discloses a traction system connectable to a ski or snowboard comprising: a motor unit provided with a traction track, a guide anchorable to said ski or snowboard and substantially perpendicular to it, wherein the motor unit is slidable along said guide between a use position and a rest position.

Document DE 202012101242 U1 discloses a drive device for a ski or a snowboard for sliding movement on a snow surface, comprising at least two power units can be attached to the snowboard and can be brought into contact with the snow surface in a drive position, at least one drive motor for driving the power transmission means, and at least one energy supply device for supplying the drive motor with energy.

Document US 2017/361202 A1 discloses a detachable propelling apparatus to be fastened to a snowboard in order to propel it uphill. Said apparatus is equipped with foldable or removable tracks, being these tracks powered by either an engine, or a motor or a turbine. The apparatus is integral with an apt adjustable attachment plate, that is directly fastenable to the feet rests (boots attachments) holes of the snowboard.

Document IT 201800006186 A1 discloses a sports equipment which comprises a ski, which includes a longitudinal axis, a first lateral edge, a second lateral edge opposite the first lateral edge with respect to the longitudinal axis, and also includes a ski touring device; said device comprising a frame, a battery, a control card, a motor, a drive shaft, which comprises an axis of rotation, means of handling and pushing means.

The objective of these technological aids is to help overcome terrain obstacles, climbs and distances with less physical effort. It is based on a regulated force that is transmitted to the drive unit. The most widespread method of such a technical aid is its use on bicycles of various designs, where the turning force is transferred from the auxiliary electric motor to the bicycle's drive wheel and thus helps recreational sportsmen/women.

In principle, they do not need to use as much energy to drive the bike through the pedals that drive the wheel.

There are two ways of using it to facilitate the torque, either by the auxiliary drive to the rear wheel or by the auxiliary drive in the pedal part of the bicycle.

This principle can basically be used in many cases where the basic movement of the given device is based on a wheel.

This method of reducing the physical demands on an individual is not suitable and feasible for moving in a straight line, i.e. in a linear manner.

Currently, a belt is also used, as an integral part of various machines and devices.

They are used in the military industry for cars and tanks, as well as in the construction industry for heavy equipment for the preparation of hard-to-reach terrains, but also in the winter season for the preparation of slopes for winter sports, specifically for snowmobiles.

The advantage of the belt is a much larger friction surface than with wheels, which tend to sink on soft surfaces.

The basis of the solution was the combination of both advantages, i.e. overcoming various terrain obstacles, climbs and distances by connecting the motor, battery and belt for straight-line movement.

The identified deficiency can be overcome by the implementation of the device described in this solution.

### The summary of the invention

The invention provides a device for facilitating sliding movement according to claim 1.

### Brief description of Drawings

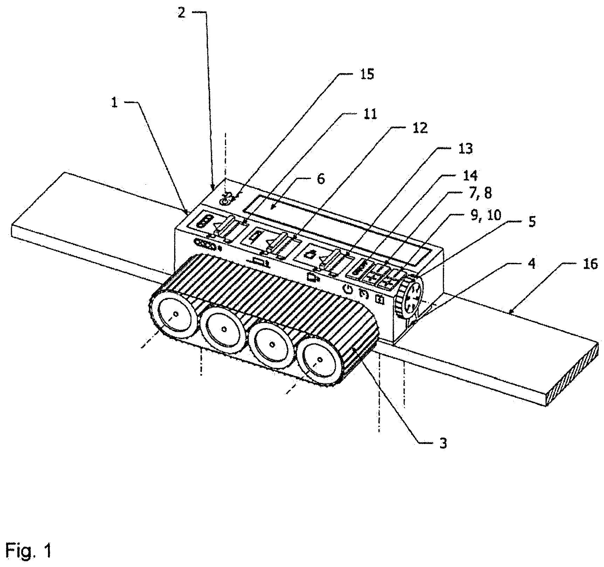

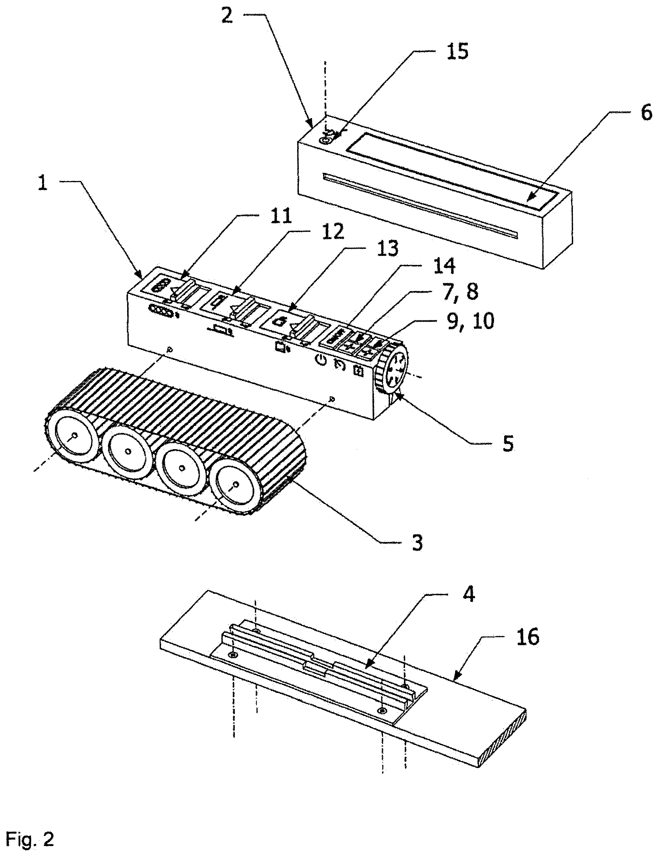

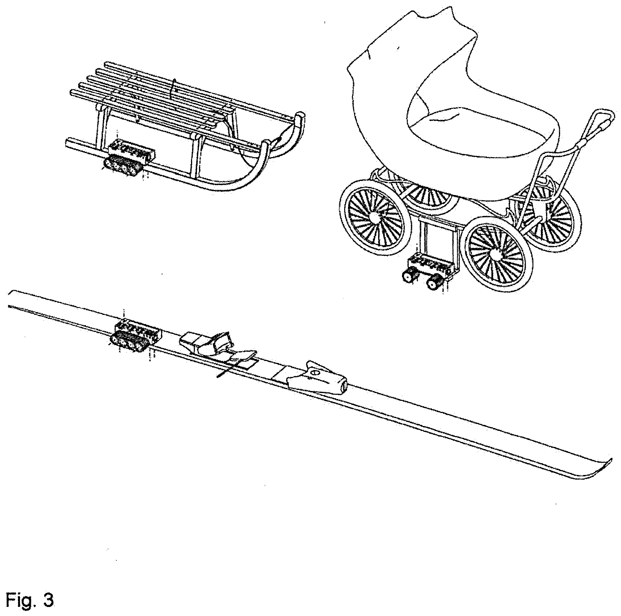

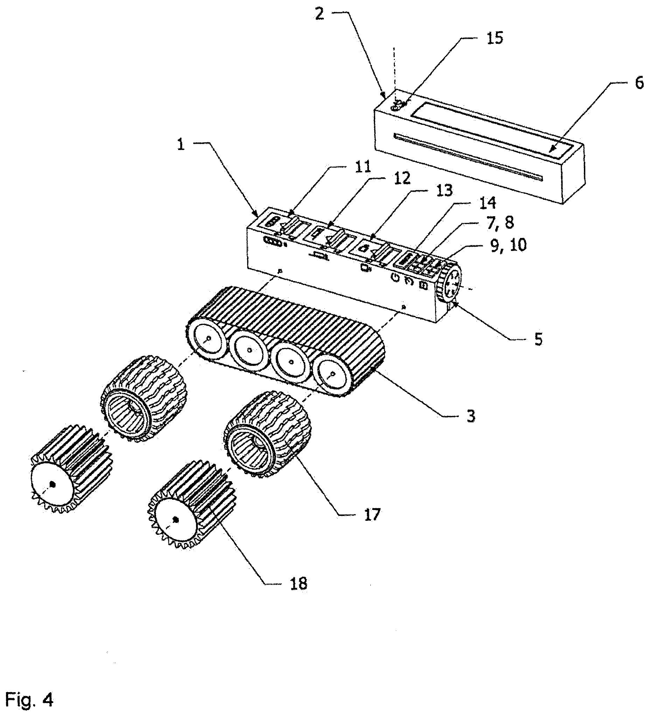

The technical solution is explained in more detail with the help of figures 1 to 4.
Fig. 1 shows a view of the complete apparatus for facilitating sliding movement.
Fig. 2 shows the individual main parts of the device. Fig. 3 shows the possibilities of using the device for individual sport equipment. Fig. 4 shows the possibility of replacing the belt with wheels or gears.

### Examples

The device consists of four main parts, namely the electric motor (1), the replaceable rechargeable battery (2), the movable replaceable belt (3) and the base (4), which is used to reduce physical demands. The charged battery (2) is connected to the electric motor (1) with the help of a lockable latch (13). The movable replaceable belt (3) also slides into the electric motor (1) through the axles of the wheels, which are an integral part of the belt, with the help of another lockable latch (11).

The components connected this way form a whole, which is simply attached to the base (4) by means of a lockable latch (12), using a quick-release mechanism, which is attached to the individual elements of use (16), and the device is put into the "on mode" using the start/stop button (14). For better friction of the belt (3) with the surface, the belt (3) is pressed against the surface using the mechanism (5), and thus the device is ready for use.

As soon as we set the individual elements of use (16) in motion with our own physical strength, we spin the belt (3) pressed against the surface, and thus the driving force is transferred to the electric motor (1), which, according to the setting with the buttons (7, 8) for regulating the speed and the buttons (9, 10) for regulating the power of the electric motor, helps to ease the physical load of the individual and thus helps to overcome various terrain obstacles, climbs and distances. The advantage of the device is also its different possibility of attaching to individual elements and the possibility of connecting to a smart application.

### Industrial applicability

The device for facilitating sliding movement according to this solution can be used for sports activities such as ski-alp skiing, cross-country skiing, or also for sledding, pushing strollers, etc.

### The list of reference marks (numbers)

1 electric motor
2 replaceable battery
3 moving belt
4 base
5 mechanism for adjusting the belt's pressure against terrain
6 display
7 & 8 speed control buttons
9 & 10 buttons for regulating battery power
11 latch for locking the moving belt
12 latch to lock the base
13 latch to lock the battery
14 start/stop button
15 charging port
16 element of use
17 wheels
18 gears

## Claims

1. A device for facilitating sliding movement over a terrain, including:
- a motor (1) which is attachable to a base (4) by means of a latch (12) equipped with a quick-release mechanism,
- a replaceable rechargeable battery (2) connected to the motor (1),
- a movable replaceable belt (3) or wheels (17) or gears (18), wherein the wheels (17) or the gears (18) or wheels of the belt (3) are equipped with axles that slide into the motor (1),
- the base (4), which is adapted to be screwed onto the individual elements (16) of use,
- a mechanism (5) for adjusting the belt's (3) pressure against the terrain,
- a display (6),
- buttons (7, 8) for regulating the speed,
- buttons (9, 10) for regulating the battery power,
- a latch (11) for locking the movable replaceable belt (3), or wheels (17) or gears (18) to the motor (1),
- a latch (13) for locking the replaceable battery (2) to the motor (1),
- a button (14) for device start/stop, and
- a port (15) for charging with an adapter.

2. A device for facilitating sliding movement according to claim 1, **characterized in that** the movable replaceable belt (3) is equipped with a cushioning for terrain irregularities.

3. A device for facilitating sliding movement according to claim 1, **characterized in that**, it is equipped with means for connection to smart devices.

## Patentansprüche

1. Vorrichtung zur Erleichterung der Gleitbewegung über dem Gelände, einschließlich:
- eines Motors (1), der mittels eines Riegels (12) an die Basis (4) befestigt werden kann, die mit einem Schnellspannmechanismus ausgestattet ist,
- einer austauschbaren aufladbaren Batterie (2), die an den Motor (1) angeschlossen ist,
- eines beweglichen austauschbaren Bands (3) oder der Räder (17) oder Zahnräder (18), wobei die Räder (17) oder Zahnräder (18) oder Räder des Bands (3) mit Achsen ausgestattet sind, die in den Motor (1) hineingleiten,
- einer Basis (4), die zum Aufschrauben auf individuelle Einsatzelemente (16) geeignet ist,
- eines Mechanismus (5) zur Einstellung des Drucks des Bands (3) auf das Gelände,
- eines Displays (6),
- der Tasten (7, 8) zur Regulierung der Geschwindigkeit,
- der Tasten (9, 10) zur Regulierung der Batterieleistung,
- eines Riegels (11) zum Verriegeln des beweglichen austauschbaren Bands (3), oder der Räder (17) oder Zahnräder (18) an den Motor (1),
- eines Riegels (13) zum Verriegeln der austauschbaren Batterie (2) an den Motor (1),
- einer Taste (14) für den Start/Stopp des Geräts, und
- eines Anschlusses (15) zum Aufladen mit einem Adapter.

2. Vorrichtung zur Erleichterung der Gleitbewegung nach Anspruch 1, **dadurch gekennzeichnet, dass** der bewegliche austauschbare Band (3) mit einer Dämpfung für Geländeunebenheiten ausgestattet ist.

3. Vorrichtung zur Erleichterung der Gleitbewegung nach Anspruch 1, **dadurch gekennzeichnet, dass**, sie mit Mitteln zum Anschließen an intelligente Geräte ausgestattet ist.

## Revendications

1. Un dispositif destiné à faciliter le mouvement de glissement sur un terrain, comprenant :
- un moteur (1) qui peut être attaché à une base (4) au moyen d'un loquet (12) équipé d'un mécanisme de déverrouillage rapide,
- une batterie rechargeable remplaçable (2) connectée audit moteur (1),
- une courroie mobile et remplaçable (3) ou des roues (17) ou des engrenages (18), où les roues (17) ou les engrenages (18) ou les roues de la courroie (3) sont pourvus d'axes qui coulissent dans ledit moteur (1),
- une base (4) adaptée pour être vissée sur les éléments individuels (16) d'utilisation,
- un mécanisme (5) pour régler la pression de la courroie (3) contre le terrain,
- un écran (6),
- des boutons (7, 8) pour régler la vitesse,
- des boutons (9, 10) pour régler la charge utile de la batterie,
- un loquet (11) pour fixer la courroie mobile et remplaçable (3) ou les roues (17) ou les engrenages (18) audit moteur (1),
- un loquet (13) pour fixer la batterie remplaçable (2) audit moteur (1),
- un bouton (14) pour le démarrage/arrêt du dispositif, et
- un port (15) pour le chargement à l'aide d'un adaptateur.

2. Le dispositif destiné à faciliter le mouvement de glissement selon la revendication 1, **caractérisé en ce que** la courroie mobile et remplaçable est pourvue d'un amortisseur pour les irrégularités du terrain.

3. Le dispositif destiné à faciliter le mouvement de glissement selon la revendication 1, **caractérisé en ce qu'**il est pourvu de moyens de connexion à des appareils intelligents.
